# EUROPÄISCHE PATENTSCHRIFT

(11) **EP 3 804 499 B1**
(45) Veröffentlichungstag und Bekanntmachung des Hinweises auf die Patenterteilung: **23.07.2025**
(21) Anmeldenummer: 20200862.9
(22) Anmeldetag: 08.10.2020
(51) Int. Cl.: A01F 15/07

(54) **LANDWIRTSCHAFTLICHE ARBEITSMASCHINE, LANDWIRTSCHAFTLICHER ARBEITSZUG MIT DER ARBEITSMASCHINE, TRENNEINHEIT FÜR DIE ARBEITSMASCHINE UND VERFAHREN ZUM STEUERN DER TRENNEINHEIT**
AGRICULTURAL WORKING MACHINE, AGRICULTURAL WORK TRAIN WITH THE WORKING MACHINE, SEPARATION UNIT FOR THE WORKING MACHINE AND METHOD FOR CONTROLLING THE SEPARATION UNIT
MACHINE DE TRAVAIL AGRICOLE, TRAIN DE TRAVAIL AGRICOLE POURVU DE LA MACHINE DE TRAVAIL, UNITÉ DE SÉPARATION POUR LA MACHINE DE TRAVAIL, ET PROCÉDÉ DE COMMANDE DE L'UNITÉ DE SÉPARATION

(30) Priorität: 11.10.2019 DE 102019007071
(43) Veröffentlichungstag der Anmeldung: 14.04.2021
(73) Patentinhaber: Maschinenfabrik Bernard Krone GmbH & Co. KG, 48480 Spelle (DE)
(72) Erfinder: de Vree, Willem Geurt, 7881 CV Emmer-compascuum (NL)

(56) Entgegenhaltungen:
- EP-A1- 0 844 815
- EP-B1- 0 844 815
- DE-U1- 9 101 764
- US-A1- 2008 083 309
- US-A1- 2012 073 455

## Beschreibung

Die vorliegende Erfindung betrifft eine landwirtschaftliche Arbeitsmaschine in Form einer Ballenpresse oder eines Ballenwicklers, mit einer Bindeeinheit zum Bereitstellen eines Bindemittels, das zum Umwickeln eines Erntegutballens vorgesehen ist, und mit einer Trenneinheit, die zum Durchtrennen des Bindemittels vorgesehen ist. Die vorliegende Erfindung betrifft weiterhin einen Arbeitszug mit der landwirtschaftlichen Arbeitsmaschine und einer Zugmaschine, an die die landwirtschaftliche Arbeitsmaschine angehängt ist, die thermische Trenneinheit, sowie ein Verfahren zum Steuern der thermischen Trenneinheit.

Um ein Auseinanderfallen eines Erntegutballens nach dem Pressen zu vermeiden, werden Erntegutballen regelmäßig mit einem Bindemittel umwickelt und dadurch gebunden. Dabei kommen Garne, Bänder, Netze und Folien zum Einsatz, die zumeist aus einem Kunststoff gefertigt sind. Nach dem Umwickeln des Erntegutballens mit dem Bindemittel wird dieses mit einem Messer oder einer Schere durchtrennt.

Jedoch sind die Einsatzsicherheit und die Schnittqualität beim Schneiden des Bindemittels von einer Spannung, mit der das Bindemittel beim Schneiden gespannt ist, und/oder von einer genauen Justierung des Messers oder der Schere abhängig. Bei einer nicht ausreichenden Spannung des Bindemittels kann dieses gegebenenfalls nicht oder zumindest nicht vollständig durchtrennt werden. Zudem kann sich ein solches Bindemittel beim Schneiden ziehen, so dass es nicht vollständig durchtrennt wird.

Dabei können Folienreste entstehen, die in das Erntegut oder auf das Feld gelangen können.

### Neue Seiten 2 bis 11a (Reinversion)

Konnte das Bindemittel nicht oder nicht vollständig durchtrennt werden, muss der Bediener die Folie manuell durchtrennen, was regelmäßig ein Verlassen der Fahrerkabine erfordert und daher aufwändig ist, und was aufgrund des scharfen Messers oder der Schere eine hohe Verletzungsgefahr birgt. Eine solche Verletzungsgefahr besteht auch bei Wartungsarbeiten, Reinigungsarbeiten oder beim Austauschen des Bindemittels. Zudem müssen Messer regelmäßig geschärft oder ausgetauscht werden.

Die Druckschrift EP 0 844 815 A1 offenbart ein Verfahren zum Herstellen von Rundballen, die mit Folie umwickelt sind, durch eine Ballenpresse mit einer Bindeeinheit. Dabei kann die Folie nach dem Umwickeln des Erntegutballens mit einem heißen Draht durchtrennt werden.

Aufgabe der Erfindung ist es, eine solche landwirtschaftliche Arbeitsmaschine dahingehend zu verbessern, dass das Durchtrennen des Bindemittels funktionssicher, sauber und gefahrenfrei durchführbar ist, und dafür weniger Wartungsaufwand entsteht.

Die Aufgabe wird gelöst mit einer thermischen Trenneinheit mit den Merkmalen des unabhängigen Patentanspruchs 1, einer landwirtschaftlichen Arbeitsmaschine mit den Merkmalen des Patentanspruchs 2, einem Arbeitszug mit den Merkmalen des Patentanspruchs 11sowie einem Verfahren mit den Merkmalen des unabhängigen Patentanspruchs 12. Vorteilhafte Ausführungsformen sind den abhängigen Ansprüchen entnehmbar.

Dafür wird eine thermischen Trenneinheit für eine landwirtschaftliche Arbeitsmaschine in Form einer Ballenpresse oder eines Ballenwicklers geschaffen.

Die Trenneinheit ist zum Durchtrennen eines Bindemittels vorgesehen und als thermische Trenneinheit ausgebildet, die eine Hitzequelle zum Durchtrennen des Bindemittels umfasst.

Die Aufgabe wird weiterhin gelöst mit einer landwirtschaftlichen Arbeitsmaschine. Die landwirtschaftliche Arbeitsmaschine ist eine Ballenpresse, insbesondere eine Rundballenpresse oder eine Quaderballenpresse, oder ein Ballenwickler. Sie kann als gezogene oder selbstfahrende Arbeitsmaschine ausgebildet sein.

Die landwirtschaftliche Arbeitsmaschine umfasst eine Bindeeinheit, die zum Bereitstellen eines Bindemittels vorgesehen ist. Die Bindeeinheit kann zudem zum Zuführen des Bindemittels in die Presskammer vorgesehen sein. Das Bindemittel ist zum Binden eines Erntegutballens vorgesehen. Es wird in der Bindeeinheit beispielsweise in Form einer abwickelbaren Bindemittelrolle bereitgestellt. Zum Binden des Erntegutballens wird dieser mit dem Bindemittel umwickelt. Dabei wird zumindest ein Teil des Erntegutballens von dem Bindemittel abgedeckt.

In der Ausführungsform als Ballenpresse umfasst die landwirtschaftliche Arbeitsmaschine einen Aufnahmerotor zum Aufnehmen des Ernteguts vom Boden sowie einen Pressraum zum Pressen des Ernteguts zu dem Erntegutballen. In dieser Ausführungsform erfolgt das Binden des Erntegutballens im Pressraum. Dafür ist die Bindeeinheit bevorzugt vor dem Pressraum, insbesondere oberhalb des Aufnahmerotors, angeordnet.

Eine Ballenpresse kann zudem eine Umwickeleinheit umfassen, in der der Ballen umwickelt, umhüllt oder eingepackt wird. In dieser Ausführungsform kann die Bindeeinheit oder eine zusätzliche Bindeeinheit in der Umwickeleinheit angeordnet sein.

In der Ausführungsform als Ballenwickler umfasst dieser eine Umwickeleinheit sowie eine Bindeeinheit, die in oder außerhalb der Umwickeleinheit angeordnet sein kann.

Zum Durchtrennen des Bindemittels weist die landwirtschaftliche Arbeitsmaschine die Trenneinheit auf. Dabei ist die Trenneinheit als thermische Trenneinheit ausgebildet ist, die eine Hitzequelle zum Durchtrennen des Bindemittels umfasst. Dabei kann die thermische Trenneinheit in der Bindeeinheit, zwischen der Bindeeinheit und dem Pressraum, oder in der Umwickeleinheit angeordnet sein. Zudem können auch mehrere Trenneinheiten, insbesondere in der Bindeeinheit, zwischen der Bindeeinheit und dem Pressraum, und/oder in der Umwickeleinheit, vorgesehen sein.

Die thermische Trenneinheit zeichnet sich dadurch aus, dass die thermische Trenneinheit einen Stabilisierungskörper umfasst, der an einem Arbeitsende einen sich verjüngenden Bereich aufweist, und der am Arbeitsende eine sich linienförmig in eine Längsrichtung erstreckende Anlagefläche für das Bindemittel bildet. Dabei ist in die Trenneinheit als Hitzequelle ein Heizleiter integriert. Zudem erstreckt sich der Heizleiter am Arbeitsende in eine die Längsrichtung, und ist in den Stabilisierungskörper eingelegt oder an den Stabilisierungskörper angelegt.

Die thermische Trenneinheit hat den Vorteil, dass sie das Bindemittel durch Hitze durchtrennt. Dadurch ist die Einsatzsicherheit der thermischen Trenneinheit sehr groß. Die dafür erforderliche Leistung ist gering. Die thermische Trenneinheit ist zudem vergleichsweise einfach justierbar und weist nur einen sehr geringen Verschleiß auf.

Durch die Verwendung von Hitze zum Durchtrennen des Bindemittels besteht außerdem eine sehr hohe Schnittsicherheit. Der Schnitt kann geradlinig ausgeführt werden und erfolgt sauber. Es entstehen dabei keine Erntegutreste, die ins Erntegut oder auf das Feld gelangen können.

Zudem können mehrere Lagen Bindemittel gleichzeitig durchtrennt werden. Weiterhin besteht nur ein geringes Verletzungsrisiko bei Einsatz einer thermischen Trenneinheit.

In einer bevorzugten Ausführungsform ist die thermische Trenneinheit in der Umwickeleinheit angeordnet. In dieser Ausführungsform kann die thermische Trenneinheit unmittelbar vor oder an dem Erntegutballen positioniert sein. Diese Ausführungsform ermöglicht nicht nur das mehrlagige Durchtrennen von Bindemittel.

Das Bindemittel kann bei dieser Ausführungsform zudem beim Durchtrennen an der Schnittkante verschweißt werden.

Das Bindemittel ist dabei bevorzugt eine Folie aus einem hitzeunbeständigen Material wie beispielsweise einem Kunststoff. Die Erfindung ist aber auch auf ein hitzeunbeständiges Netz oder Band anwendbar.

Die Hitzequelle der thermischen Trenneinheit ist als ein Heizleiter ausgebildet. Ein solcher Heizleiter kann an einer Gleichspannungsquelle mit einer geringen Spannung betrieben werden. Die dafür erforderliche Energie ist gering. Sie kann aber auch als optische Hitzequelle ausgebildet sein, beispielsweise als Infrarotstrahler oder als Laserstrahler. In diesen Ausführungsformen kann die Hitzequelle auf eine Kante oder entlang einer durch das Bindemittel aufgespannten Ebene auf das Bindemittel einwirken. Dadurch wird das Bindemittel entlang eines Teils seiner Breite oder entlang seiner gesamten Breite durchtrennt. Um auch bei einem Einwirken der Hitzequelle auf nur einen Teil des Bindemittels ein vollständiges Durchtrennen des Bindemittels sicher zu gewährleisten, ist es bevorzugt, dass das Bindemittel dabei gespannt ist. Dann wird der nicht durch die Hitzequelle durchtrennte Teil des Bindemittels zerrissen. Auch dabei entstehen keine Bindemittelreste, die ins Erntegut oder auf das Feld gelangen können.

Prinzipiell kann der Heizleiter in Form eines Drahts in der Arbeitsmaschine zum Durchtrennen genutzt werden. In dieser Ausführungsform ist der erforderliche Bauraum äußerst gering. Jedoch ist ein solcher Draht ungeschützt und kann sich verbiegen oder durchbrechen. Vorzugsweise ist der Heizleiter daher von einem Material umgeben oder an ein Material angelegt, dass ihn, insbesondere beim Durchtrennen des Bindemittels, stützt und/oder schützt.

In einer ganz besonders bevorzugten Ausführungsform ist das Material reaktionsträge. Der Heizleiter ist dann zumindest teilweise von dem reaktionsträgen Material umgeben. Aufgrund der Reaktionsträgheit des den Heizleiter zumindest teilweise umgebenden Materials kann ein Anhaften von Teilen des Bindemittels sowie von Staub und Schmutz verringert oder sogar vermieden werden. Um die benötigte Energie zum Durchtrennen des Bindemittels dennoch möglichst gering zu halten, ist es zudem bevorzugt, dass das den Heizleiter zumindest teilweise umgebende Material gut wärmeleitend ist. Das den Heizleiter zumindest teilweise umgebende Material ist weiterhin bevorzugt elektrisch nicht leitfähig. Zudem weist es bevorzugt einen sehr hohen Schmelzpunkt auf.

Das den Heizleiter zumindest teilweise umgebende Material ist bevorzugt ein Kunststoff. Besonders bevorzugt ist es Polytetrafluorethylen. Es können aber auch andere Materialien genutzt werden, die die Eigenschaften gut wärmeleitend, reaktionsträge, nicht elektrisch leitfähig und sehr hoher Schmelzpunkt aufweisen. Das Material kann als Bandmaterial ausgebildet sein und um den Heizleiter gelegt oder gewickelt sein. Weiterhin kann der Heizleiter mit dem Material zumindest teilweise oder vollständig beschichtet sein.

In einer bevorzugten Ausführungsform ist der Heizleiter an das Material angelegt oder in dieses eingelegt, so dass das Material die Lage des Heizleiters stabilisiert, und sich diese, vorzugsweise auch beim Anlegen des Bindemittels an die thermische Trenneinheit oder bei angelegtem Bindemittel, nicht ändert.

Weiterhin bevorzugt ist, dass der Stabilisierungskörper teilweise aus dem gut wärmeleitenden und/oder reaktionsträgen Material gebildet ist. Der Stabilisierungskörper für den Heizleiter ist dabei in seinen Ausmaßen bevorzugt so bemessen, dass er sich im normalen Betrieb, insbesondere beim Anlegen des gespannten Bindemittels, nicht verbiegt. Dadurch kann eine Materialermüdung und/oder ein Verbiegen des Heizleiters vermieden werden.

In der Ausführungsform, in der der Heizleiter an das sich verjüngende Ende des Stabilisierungskörpers angelegt ist, ist es besonders bevorzugt, dass er mit dem reaktionsträgen Material umgeben ist, um das Anhaften von Teilen des Bindemittels und/oder von Staub oder Schmutz an den Heizleiter zu verringern oder zu vermeiden. Zudem wird dadurch die Gefahr, dass der Heizleiter verrutscht, verringert. Bei dieser Ausführungsform ist das reaktionsträge Material bevorzugt als Bandmaterial ausgebildet und um den Heizleiter gelegt oder gewickelt. Alternativ ist der Heizleiter bei dieser Ausführungsform mit dem Material zumindest teilweise oder vollständig beschichtet.

Es ist aber eine Ausführungsform ganz besonders bevorzugt, bei der das sich verjüngende Ende des Stabilisierungskörpers aus dem reaktionsträgen und/oder gut wärmeleitenden Material gebildet, und der Heizleiter am sich verjüngenden Ende des Stabilisierungskörpers in diesen eingelegt ist. Dadurch ist der Heizleiter vollständig von dem reaktionsträgen Material umgeben, so dass er seine Position nicht verändern und nicht verbiegen oder sogar brechen kann. Da der Heizleiter zudem am sich verjüngenden Ende des Stabilisierungskörpers angeordnet ist, sind eine Materialdicke des ihn umgebenden Materials und die zum Durchtrennen des Bindemittels benötigte Energie gering.

Im Folgenden ist der aus dem reaktionsträgen und/oder gut wärmeleitenden Material gebildete Teil des Stabilisierungskörpers, in den der Heizleiter eingelegt ist, auch als Kern bezeichnet.

Ein den Kern umgebender Teil des Stabilisierungskörpers kann aus einem anderen, insbesondere kostengünstigeren, Material wie beispielsweise Polyethylen hergestellt sein. Dieser Teil des Stabilisierungskörpers ist im Folgenden auch als Mantel bezeichnet. In dieser Ausführungsform umfasst der Stabilisierungskörper daher den Kern mit dem von dem reaktionsträgen und/oder gut wärmeleitenden Material umgebenen Heizleiter sowie den Mantel. Die Ausführungsform hat den Vorteil, dass nur wenig teures, reaktionsträges und/oder gut wärmeleitendes Material für den Kern benötigt wird. Der Stabilisierungskörper ist daher insgesamt kostengünstig herstellbar. Prinzipiell kann der Stabilisierungskörper aber auch vollständig aus dem reaktionsträgen und/oder gut wärmeleitenden Material hergestellt sein.

In einer besonders bevorzugten Ausführungsform ist der Kern in den Mantel eingelegt oder eingeschoben. In dieser Ausführungsform ist eine Herstellung des Kerns in einem Strangpressverfahren bevorzugt. In Abhängigkeit von den verwendeten Materialien können der Kern und der Mantel aber auch einstückig gefertigt sein, beispielsweise in einem Mehrkomponenten- Spritzgussverfahren.

Bevorzugt umfasst der Heizleiter ein Anschlussende und ein Leiterende, wobei am Leiterende ein Rückführleiter elektrisch leitend angeschlossen ist, und wobei am Anschlussende ein elektrisches Anschlussmittel angeordnet ist, das zum Anschließen des Heizleiters an eine elektrische Spannungsquelle vorgesehen ist, und an das der Rückführleiter und das Anschlussende des Heizleiters elektrisch leitend angeschlossen sind. Dabei ist die elektrische Spannungsquelle bevorzugt eine Gleichspannungsquelle. Diese Ausführungsform erfordert im Betrieb eine Spannung von etwa 9 - 15V, vorzugsweise 12V. Lediglich zum Durchtrennen des Bindemittels ist dann ein Strom von etwa 2 - 4A, vorzugsweise etwa 3A erforderlich. Der Heizleiter wird dabei bevorzugt auf nicht mehr als 150°C, besonders bevorzugt auf etwa 120°C erhitzt. Es hat sich gezeigt, dass diese Temperatur zum Schneiden des Bindemittels ausreichend ist.

Damit der Rückführleiter geschützt ist, ist es zudem bevorzugt, dass im Stabilisierungskörper eine Durchgangsbohrung vorgesehen ist, die zur Aufnahme des Rückführleiters dient.

Auf den Stabilisierungskörper sind bevorzugt Endkappen aufgesteckt, die zum Schutz des Anschlussendes sowie des Leiterendes des Heizleiters dienen. Dabei ist es weiterhin bevorzugt, dass das elektrische Anschlussmittel in einer der Endkappen angeordnet ist. In dieser Ausführungsform bildet das thermische Trennelement ein kompaktes modulares Bauteil mit vergleichsweise kleinen Ausmaßen. Es kann daher an unterschiedlichen Positionen der landwirtschaftlichen Arbeitsmaschine einfach angeordnet werden.

Die landwirtschaftliche Arbeitsmaschine umfasst bevorzugt eine Steuerungseinheit zum Steuern der thermischen Trenneinheit. Dabei ist es besonders bevorzugt, dass die thermische Trenneinheit einen Sensor zur Erfassung ihrer oder der Temperatur des Heizleiters umfasst. In dieser Ausführungsform ist eine Steuerung oder Regelung der thermischen Trenneinheit in Abhängigkeit von der erfassten Temperatur möglich.

Dabei ist es bevorzugt, dass die thermische Trenneinheit nur in einem Trennzustand, in dem ein zum Umwickeln eines Erntegutballens vorgesehenes Bindemittel durchtrennt wird, auf eine Trenntemperatur, die größer als eine in einem Grundzustand vorliegende Grundtemperatur ist, aufgeheizt wird.

Dafür kann die thermische Trenneinheit im Grundzustand ausgeschaltet sein. In dieser Ausführungsform kann als Sensor ein Bimetallsensor genutzt werden, der im elektrischen Schaltkreis der thermischen Trenneinheit in Reihe mit dem Heizleiter geschaltet ist. Der Bimetallsensor wirkt dann wie ein Thermoschalter, der bei einer vorgegebenen oder vorgebbaren Temperatur öffnet, so dass der Heizleiter abgeschaltet wird. Bei eingeschaltetem Schaltkreis wird daher der Thermoschalter zyklisch geöffnet und wieder geschlossen. Dadurch bestimmt ein Mittelwert des dabei fließenden Stromes die Trenntemperatur.

In einer alternativen Ausführungsform ist der Heizleiter auch im Grundzustand auf eine Grundtemperatur erwärmt, die größer als 0° beträgt. Diese Ausführungsform hat den Vorteil, dass der Heizleiter nicht mehr so stark erwärmt werden muss, um die Trenntemperatur zu erreichen. Das Schalten in den Trennzustand kann dadurch sehr schnell erfolgen. Die Grundtemperatur ist bei dieser Ausführungsform bevorzugt so gewählt, dass sie bei Berührkontakt nicht zu einer Verletzung der Person führt.

Weiterhin bevorzugt umfasst die landwirtschaftliche Arbeitsmaschine eine Thermosicherung, die die thermische Trenneinheit abschaltet, wenn die Temperatur eine Grenztemperatur überschreitet. Die Thermosicherung kann im elektrischen Schaltkreis der thermischen Trenneinheit angeordnet sein. In dieser Ausführungsform ist sie dazu eingerichtet, den Schaltkreis bei Überschreiten der Grenztemperatur zu unterbrechen. Es ist aber ebenfalls eine Ausführungsform bevorzugt, bei der die Thermosicherung außerhalb des Schaltkreises der thermischen Trenneinheit angeordnet ist, und dazu eingerichtet ist, eine Umgebungstemperatur der thermischen Trenneinheit zu erfassen. Eine Unterbrechung des Schaltkreises der thermischen Trenneinheit kann bei dieser Ausführungsform durch die Steuerungseinheit erfolgen.

In einer Ausführungsform der landwirtschaftlichen Arbeitsmaschine als selbstfahrende landwirtschaftliche Arbeitsmaschine kann in einer Fahrerkabine eine Benutzerschnittstelle vorgesehen sein, die eine Einstellung der thermischen Trenneinheit, insbesondere eine Einstellung des verwendeten Bindemittels und/oder der zum Durchtrennen des Bindemittels genutzten Trenntemperatur des Heizleiters, ermöglicht.

Die Aufgabe wird weiterhin gelöst mit einem landwirtschaftlichen Arbeitszug mit einer Zugmaschine und einer solchen landwirtschaftlichen Arbeitsmaschine, wobei die Zugmaschine eine Benutzerschnittstelle umfasst, die zum Einstellen der thermischen Trenneinheit vorgesehen ist. Bei dieser Ausführungsform der landwirtschaftlichen Arbeitsmaschine als mit einer Zugmaschine gezogene landwirtschaftliche Arbeitsmaschine ist die Benutzerstelle bevorzugt in einer Fahrerkabine der Zugmaschine angeordnet.

Die thermische Trenneinheit weist eine optische oder elektrische Hitzequelle auf. Die Hitzequelle wirkt auf eine Kante oder eine Fläche des Bindemittels, so dass es diese durch Hitzeeinwirkung zumindest teilweise oder vollständig durchtrennt. Sofern das Bindemittel nur teilweise durch Hitzeeinwirkung durchtrennt wird, wird es bevorzugt im Übrigen durch Zerreißen durchtrennt.

In der Ausbildung der Hitzequelle als Heizleiter wird dieser durch den Stabilisierungskörper geschützt. Dabei bildet das sich verjüngende Ende eine definierte Anlagefläche für das Bindemittel.

Die thermische Trenneinheit weist eine hohe Schnittsicherheit auf, ist wartungsarm, und kompakt modular aufgebaut. Bei dieser Art und Weise des Durchtrennens des Bindemittels treten außerdem keine Bindemittelreste auf, die in das Erntegut oder auf das Feld gelangen können.

Die Aufgabe wird weiterhin gelöst mit einem Verfahren zum Steuern einer solchen thermischen Trenneinheit, bei dem eine Hitzequelle der thermischen Trenneinheit in einem Grundzustand nicht oder nur mit einer Grundtemperatur betrieben wird, und bei dem die Hitzequelle nur in einem Trennzustand, in dem ein zum Umwickeln eines Erntegutballens vorgesehenes Bindemittel durchtrennt wird, auf eine Trenntemperatur, die größer als die Grundtemperatur ist, aufgeheizt wird. Da die Hitzequelle nur im Trennzustand auf die Trenntemperatur erhitzt wird, ist der zum Durchtrennen des Bindemittels benötigte Energiebedarf gering. Die Trenntemperatur beträgt dabei bevorzugt nicht mehr als 150°C, besonders bevorzugt etwa 120°C. Um eine Verletzungsgefahr für einen Bediener klein zu halten, beträgt die Grundtemperatur bei Verwendung einer elektrischen Hitzequelle bevorzugt nicht mehr als 70°C, besonders bevorzugt nicht mehr als 60°C.

Die Hitzequelle ist ein Heizleiter, wobei zumindest ein Teil des Bindemittels im Trennzustand an den Heizleiter oder einen den Heizleiter umfassenden Stabilisierungskörper angelegt wird. Dabei ist es weiterhin bevorzugt, dass das Bindemittel zumindest im Trennzustand gespannt ist. Dadurch kann das Bindemittel sehr schnell durchtrennt werden. Sofern es im Trennzustand unmittelbar am Erntegutballen angeordnet ist, können nicht nur mehrere Lagen Bindemittel gleichzeitig durchtrennt, sondern das Bindemittel zudem an der Schnittkante verschweißt werden.

Die thermische Trenneinheit kann dafür auf das Bindemittel zubewegt werden, oder das Bindemittel kann auf die thermische Trenneinheit zubewegt werden.

Im Folgenden wird die Erfindung anhand von Figuren beschrieben. Die Figuren sind lediglich beispielhaft und schränken den allgemeinen Erfindungsgedanken nicht ein.

Es zeigen
- Fig. 1: schematisch einen Arbeitszug mit einer Zugmaschine und einer von der Zugmaschine gezogenen erfindungsgemäßen landwirtschaftlichen Arbeitsmaschine;
- Fig. 2: eine perspektivische Ansicht einer thermischen Trenneinheit für die landwirtschaftliche Arbeitsmaschine der Fig. 1;
- Fig. 3: in (a) eine transparent erscheinende Darstellung der Trenneinheit aus Fig. 2, wobei eine Endkappe der Trenneinheit auf diese aufgeschoben und eine weitere Endkappe der Trenneinheit von dieser abgenommen ist, in (b) die in Fig. 3 (a) gelöste Endkappe in einer vergrößerten transparent erscheinenden Darstellung, und in (c) einen Ausschnitt aus der Trenneinheit der Fig. 3 (a) in einer nicht transparent erscheinenden Darstellung;
- Fig. 4: in (a) - (d) jeweils schematisch ein Schnittbild durch eine Ausführungsform einer thermischen Trenneinheit;
- Fig. 5: in (a) - (d) jeweils schematisch eine Anordnung aus einer thermischen Trenneinheit und einem Bindemittel; und
- Fig. 6 und 7: jeweils eine weitere Ausführungsform einer thermischen Trenneinheit.

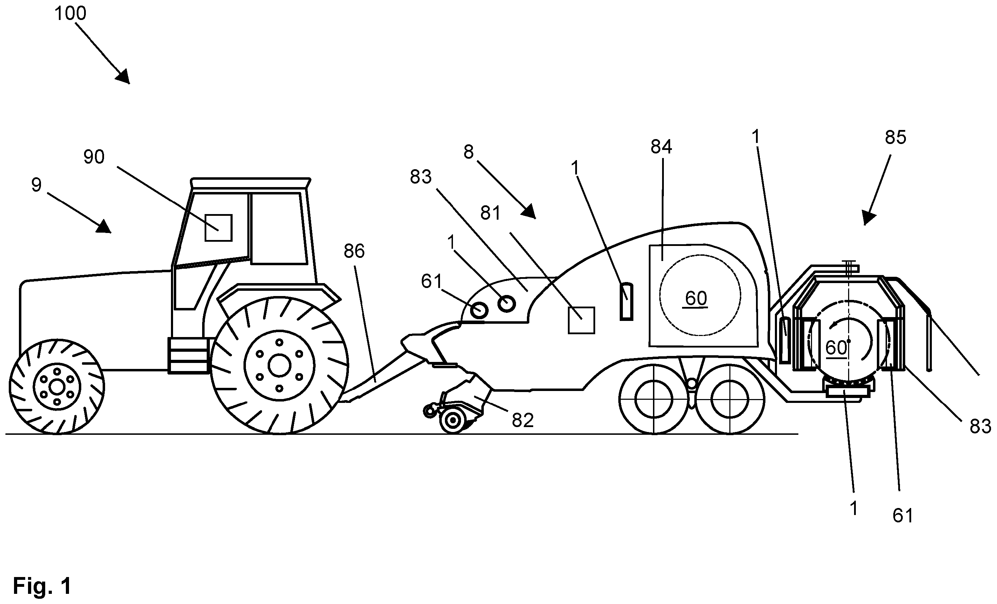

Fig. 1 zeigt schematisch einen Arbeitszug 100 umfassend eine Zugmaschine 9 und eine erfindungsgemäße landwirtschaftliche Arbeitsmaschine 8. Bei der landwirtschaftlichen Arbeitsmaschine 8 handelt es sich um eine Ballenpresse, hier eine Rundballenpresse mit einem Ballenwickler, der eine Umwickeleinheit 85 umfasst. Alternativ kann ein Ballenwickler mit einer solchen Umwickeleinheit 85 auch an die landwirtschaftliche Arbeitsmaschine angehängt sein. Im Folgenden werden die Begriffe landwirtschaftliche Arbeitsmaschine 8, Ballenpresse, Rundballenpresse synonym verwendet. Die Erfindung ist aber nicht auf Rundballenpressen 8 beschränkt, sondern auch auf Ballenwickler oder andere Ballenpressen 8 wie beispielsweise Quaderballenpressen anwendbar.

Die Rundballenpresse 8 ist mittels einer Deichsel 86 an das Zugfahrzeug 100 angehängt. Es handelt sich bei der Rundballenpresse 8 hier daher um eine gezogene landwirtschaftliche Arbeitsmaschine 8. Die Erfindung ist aber auch auf selbstfahrende landwirtschaftliche Arbeitsmaschinen 8 anwendbar, beispielsweise auf selbstfahrende Ballenpressen 8.

Die Rundballenpresse 8 weist eine Aufnahmevorrichtung 82, hier eine Pick- up, auf, die einen Aufnahmerotor umfasst, der zum Aufnehmen von Erntegut (nicht gezeigt) wie beispielsweise Heu oder Stroh vom Boden vorgesehen ist. Die Begriffe Aufnahmevorrichtung 82 und Pick- up werden daher im Folgenden synonym verwendet.

Das aufgenommene Erntegut wird in einem Pressraum 84 der Ballenpresse 8 zu einem Erntegutballenballen 6 gepresst und geformt. Um ein Zerfallen des Erntegutballens 6 zu vermeiden, wird der Erntegutballen 6 mit einem Bindemittel 61 umschlungen, das in einer Bindeeinheit 83 in Form einer abwickelbaren Bindemittelrolle 61 bereitgestellt wird. Im Folgenden werden die Begriffe Bindemittel 61 und Bindemittelrolle 61 synonym verwendet. Mögliche Bindemittel 61 sind Netze, Garne, Bänder oder auch Folien. Nachdem der Erntegutballen 60 mit Bindemittel 61 umschlungen ist, wird das Bindemittel 61 von der Bindemittelrolle 61 durch eine Trenneinheit 1 durchtrennt.

Die Trenneinheit 1 ist hier als thermische Trenneinheit 1 ausgebildet. Sie weist daher eine Hitzequelle in Form eines Heizleiters auf. Die mit dem Heizleiter erzeugte Hitze wird zum Durchtrennen des Bindemittels 61 genutzt.

Dabei bestehen verschiedene Möglichkeiten bezüglich der örtlichen Anordnung der Bindeeinheit 83, und damit der Bindemittelrolle 61, und der Trenneinheit 1. In Fig. 1 sind verschiedene Anordnungen der Bindeeinheit 83 sowie der Trenneinheit 1 schematisch gezeigt.

Bei einer ersten Variante sind die Bindeeinheit 83 und die Trenneinheit 1 in einer Fahrtrichtung (nicht bezeichnet) des Arbeitszugs 100 vorne in einem Bereich oberhalb der Pick- up 82 angeordnet. In einer zweiten Variante sind die Bindeeinheit 83 und die Trenneinheit 1 in der Umwickeleinheit 85 angeordnet. In Fig. 1 sind für diese Variante zwei Ausführungsformen schematisch dargestellt, wobei die Trenneinheit 1 in der ersten Ausführungsform im Wesentlichen vertikal ausgerichtet und neben dem Erntegutballen 60 angeordnet ist, und wobei die Trenneinheit 1 in der zweiten Ausführungsform unterhalb des Erntegutballens 60 angeordnet und im Wesentlichen horizontal ausgerichtet ist. Die Trenneinheit 1 kann in einer weiteren Variante auch in einem Bereich nahe des Pressraums 84, insbesondere zwischen der Bindeeinheit 83 und dem Pressraum 84, angeordnet sein.

Die Trenneinheit 1 zum Trennen des Bindematerials 61 ist in Abhängigkeit von ihrer örtlichen Anordnung durch eine Steuerungseinheit 81 entweder der Rundballenpresse 8, wenn sie in der Rundballenpresse 8 angeordnet ist, oder der Umwickeleinheit 85, wenn sie in der Umwickeleinheit 85 angeordnet ist, des landwirtschaftlichen Arbeitszugs 100 steuerbar. Zum Steuern der Trenneinheit 1 wird daher als Steuerungseinheit 81 ein Jobrechner der Rundballenpresse 8 oder der Umwickeleinheit 85 genutzt. Dafür weist die Zugmaschine 9 eine Benutzerschnittstelle 90 auf, an der diverse Einstellungen bezüglich des Trennens des Bindemittels 61 von einem Bediener (nicht gezeigt) durchführbar sind. Ein Datenaustausch zwischen der genutzten Steuerungseinheit 81 und der Benutzerschnittstelle 90 kann drahtlos, beispielsweise über Funk oder WLAN, oder drahtgebunden, beispielsweise über einen ISOBUS oder CAN- Bus, erfolgen.

Aufgrund des so möglichen Datenaustauschs zwischen Rundballenpresse 8, Umwickeleinheit 85 und/oder Zugmaschine 9 kann prinzipiell aber auch eine beliebige andere Steuerungseinheit beziehungsweise Jobrechner des Arbeitszugs 100 zum Steuern der Trenneinheit 1 genutzt werden, insbesondere die Steuerungseinheit der Zugmaschine 9, oder bei Anordnung der Trenneinheit 1 in der Umwickeleinheit 85 die der Rundballenpresse 8, oder bei Anordnung der Trenneinheit 1 in der Rundballenpresse 8 die der Umwickeleinheit 85.

Die Einstellungen beziehen sich beispielsweise auf die Temperatur der Trenneinheit 1 während des Trennens des Bindemittels 61 und/oder die Zeitspanne, die zum Durchtrennen des Bindemittels 61 benötigt wird. Bekannte Bindemittel 61, wie Bänder, Folien oder Netze können dabei ihre individuellen Einstellungsparameter haben, mit denen die Steuerungseinheit 91 die Trenneinheit 1 steuert. In Abhängigkeit von der gewählten Temperatur und/oder der gewählten Zeitspanne ermöglicht die Trenneinheit 1 nach dem Durchtrennen ein Verschweißen eines Bindemittelendes (nicht bezeichnet) des den Erntegutballen 60 umschlingenden Bindemittels 61 an diesem.

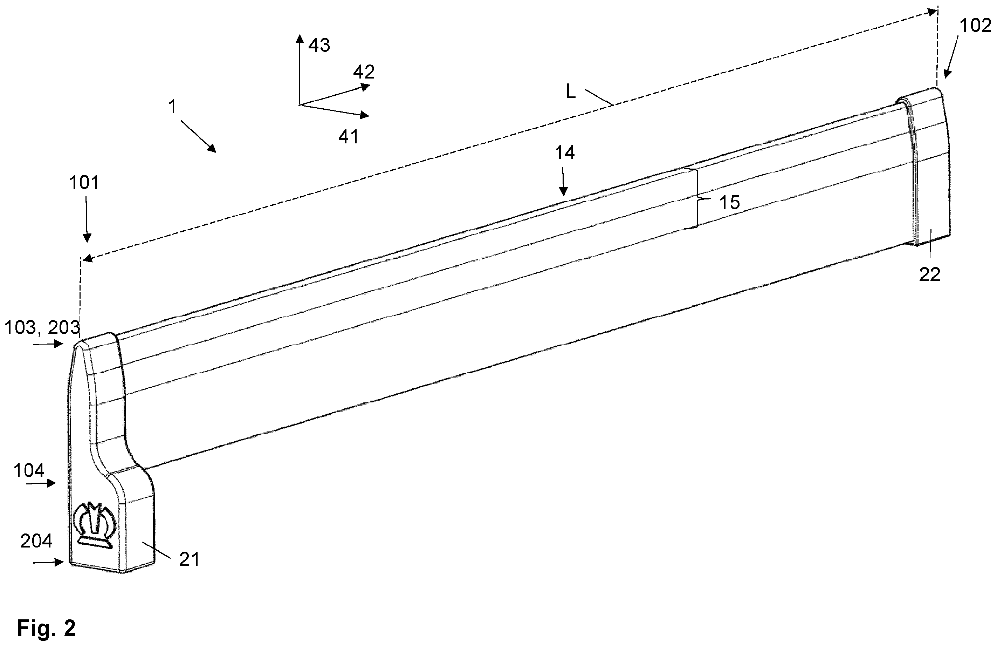

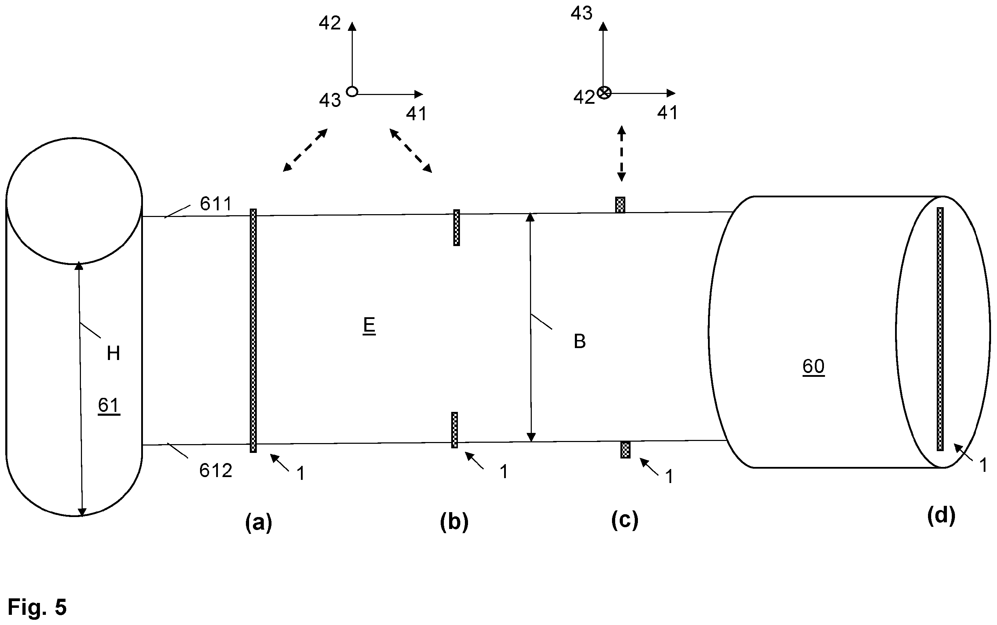

Fig. 2 zeigt eine perspektivische Ansicht einer thermischen Trenneinheit 1 für die landwirtschaftliche Arbeitsmaschine 8 der Fig. 1. Die Trenneinheit 1 ist stabförmig ausgebildet und erstreckt sich in eine Längsrichtung 42 von einem vorderen Ende 101 zu einem hinteren Ende 102. Sie weist in Längsrichtung 42 eine Länge L auf, die einer Breite B (s. Fig. 5) eines gespannten Bindemittels 61 entspricht. In eine Querrichtung 41 quer zur Längsrichtung 42 weist sie eine geringe Dicke (nicht bezeichnet) auf. Um ihr eine ausreichende Stabilität zu verleihen, ist zudem vorgesehen, dass sie in einer Erstreckungsrichtung 43, die sich quer zur Längsrichtung 42 und quer zur Querrichtung 41 erstreckt, eine gegenüber ihrer Dicke größere Erstreckung (nicht bezeichnet) aufweist. In Erstreckungsrichtung 43 erstreckt sie sich von einem unteren Ende 104 zu einem Arbeitsende 103.

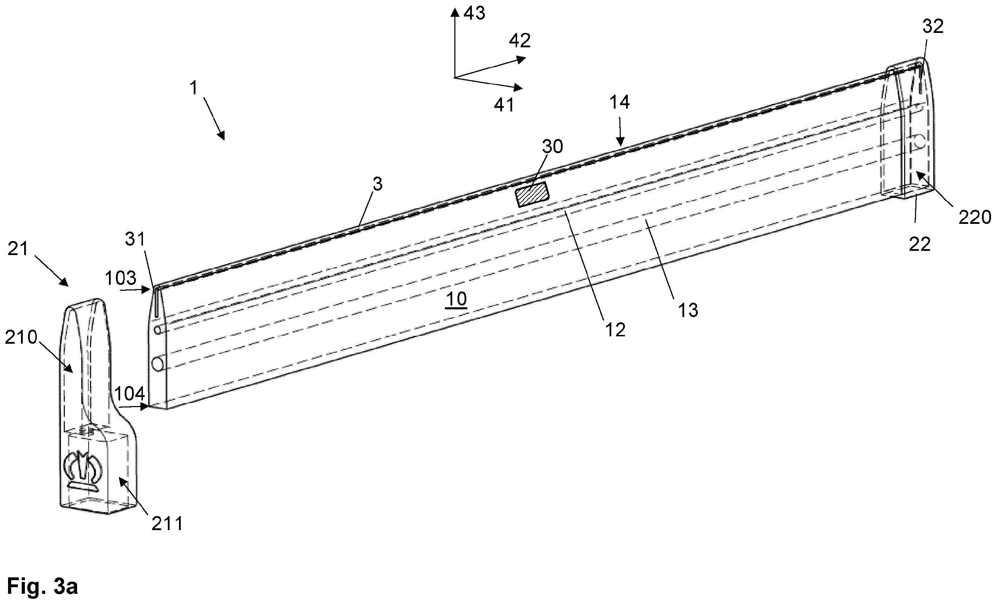

In die Trenneinheit 1 ist als Hitzequelle ein Heizleiter 3 (s. Fig. 3 (a)) integriert, der sich am Arbeitsende 103 in Längsrichtung 42 erstreckt. Der Heizleiter 3 ist in ein Material eingelegt, dass ihn vollumfänglich umgibt. Das Material ist hier ein Kunststoff. Es bildet einen Stabilisierungskörper 10 für den Heizleiter 3.

Der Stabilisierungskörper 10 weist an seinem Arbeitsende 103 einen sich verjüngenden Bereich 15 auf. Am Arbeitsende 103 bildet dieser eine sich linienförmig in die Längsrichtung 42 erstreckende Anlagefläche 14 für das Bindemittel 61. Die Anlagefläche 14 ist in einem Trennzustand, in dem das zum Umwickeln eines Erntegutballens 60 vorgesehene Bindemittel 61 durchtrennt wird, als Kontaktbereich für das Bindemittel 61 vorgesehen. Das Bindemittel 61 liegt dann an der Anlagefläche 14 an.

An dem vorderen Ende 101 und dem hinteren Ende 102 des Stabilisierungskörpers 10 sind jeweils Endkappen 21,22 aufgesteckt. Die Endkappen 21, 22 weisen jeweils ein oberes Ende 203 und ein unteres Ende 204 auf. Die Endkappen 21, 22 sind zum Schutz von elektrischen Anschlüssen der thermischen Trenneinheit 1 vorgesehen. Im Folgenden wird die am vorderen Ende 101 angeordnete Endkappe 21 auch als Anschlusskappe und die am hinteren Ende 102 angeordnete Endkappe 22 auch als Abschlusskappe bezeichnet.

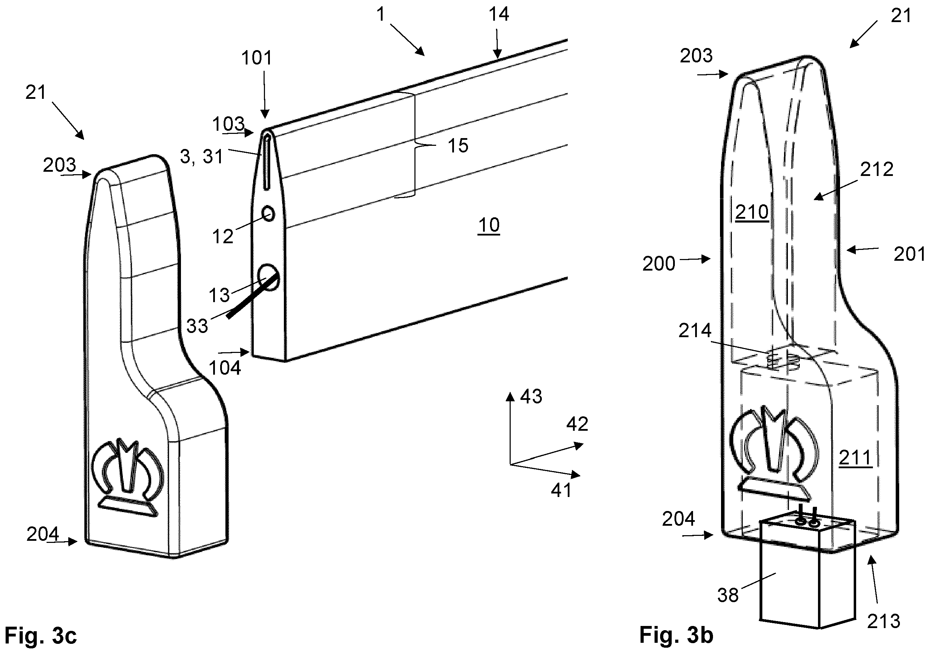

Fig. 3 zeigt in (a) eine transparent erscheinende Darstellung der Trenneinheit 1 aus Fig. 2, wobei die Abschlusskappe 22 auf das hintere Ende 102 der Trenneinheit 1 aufgeschoben ist. Die am vorderen Ende 101 aufsteckbare Anschlusskappe 21 der Trenneinheit 1 ist von dieser abgenommen.

Die Anschlusskappe 21 und die Abschlusskappe 22 unterscheiden sich in ihrer Form. Denn die Anschlusskappe 21 weist neben einem ersten Aufnahmeraum 210 zum Einstecken des Stabilisierungskörpers 10 der Trenneinheit 1 zudem einen zweiten Aufnahmeraum 211 auf, der zur Aufnahme eines elektrischen

Anschlussmittels 38 (s. Fig. 3 (b)) vorgesehen ist. An das elektrische Anschlussmittel 38 ist der Heizleiter 3 elektrisch anschließbar. Es ist zum Verbinden des Heizleiters 3 mit einer elektrischen Spannungsquelle (nicht gezeigt) vorgesehen, insbesondere mit einer Gleichspannungsquelle. Die Abschlusskappe 22 weist demgegenüber lediglich den ersten Aufnahmeraum 220 auf.

Durch die transparente Darstellung ist die Lage des Heizleiters 3 im Stabilisierungskörper 10 am Arbeitsende 103 sichtbar. Der Heizleiter 3 erstreckt sich am sich verjüngenden Ende 15, hier unmittelbar unterhalb des Arbeitsendes 14, des Stabilisierungskörpers 10 in Längsrichtung 42. Der Heizleiter 3 weist sowohl am vorderen Ende 101 als auch am hinteren Ende 102 des Stabilisierungskörpers 10 ein offenes Ende 31, 32 auf, das aus dem Stabilisierungskörper 10 herausgeführt ist. Das am vorderen Ende 101 herausgeführte offene Ende 31 des Heizleiters 3 ist im Folgenden als Anschlussende 31 bezeichnet. Das am hinteren Ende 102 des Stabilisierungskörpers 10 herausgeführte offene Ende 32 ist im Folgenden als Leiterende 32 bezeichnet. Das Anschlussende 31 und das Leiterende 32 sind zum Anschließen des Heizleiters 3 an das elektrische Anschlussmittel 38 vorgesehen.

Sichtbar ist zudem, dass sich im Stabilisierungskörper 10 eine erste Durchgangsbohrung 12 und eine zweite Durchgangsbohrung 13 in die Längsrichtung 42 erstrecken, die in Erstreckungsrichtung 43 voneinander und vom Heizleiter 3 beabstandet sind. Die zweie Durchgangsbohrung 13 ist zum Durchführen eines Rückführleiters 33 (s. Fig. 3 (c)) vorgesehen, der mit dem Leiterende 32 des Heizleiters elektrisch verbunden ist. Der Rückführleiter 33 ist dadurch vom Stabilisierungskörper 10 umgeben und vor Beschädigungen geschützt. Die erste Durchgangsbohrung 12 kann zum Befestigen von Verbindungsmitteln (nicht gezeigt) genutzt werden, mit denen das Leiterende 32 mit dem Rückführmittel 33, oder das Leiterende 32 oder das Anschlussende 31 mit dem elektrischen Anschlussmittel 38, elektrisch verbindbar ist.

Im sich verjüngenden Bereich 15 ist beispielhaft schematisch ein Temperatursensor 30 gezeigt, welcher die Temperatur des Heizleiters 3 misst, und die gemessenen Daten an die Steuerungseinheit 91 weitergibt. Dadurch ist die Temperatur des Heizleiters 3 in Abhängigkeit von der erfassten Temperatur steuerbar oder regelbar.

Fig. 3 zeigt in (b) die in Fig. 3 (a) vom Stabilisierungskörper 10 gelöste Anschlusskappe 21 in einer vergrößerten, transparent erscheinenden Darstellung. Der erste Aufnahmeraum 210 ist durch eine an einer Rückseite 201 der Anschlusskappe 21 vorgesehene erste Einstecköffnung 212 von außen zugänglich. Der zweite Aufnahmeraum 211 ist durch eine am unteren Ende 204 der Anschlusskappe 21 vorgesehene zweite Einstecköffnung 213 von außen zugänglich. Eine Ausnehmung 224, die sich vom ersten Aufnahmeraum 210 zum zweiten Aufnahmeraum 211 erstreckt, ermöglicht ein Anschließen des Anschlussendes 31 und des Rückführleiters 33 an das in den zweiten Aufnahmeraum 221 eingeschobene elektrische Anschlussmittel 38. Das Einführen des elektrischen Anschlussmittels 38 in Erstreckungsrichtung 43 in den zweiten Aufnahmeraum 211 ist in Fig. 3 (b) schematisch dargestellt. An dem elektrischen Anschlussmittel 38 sind dafür hier zwei Anschlüsse (nicht bezeichnet) angeordnet, welche mit dem Anschlussende 31 des Heizleiters 3 und dem Rückführleiter 33 elektrisch verbindbar sind.

Fig. 3 zeigt in (c) einen Ausschnitt aus der Trenneinheit 1 der Fig. 3 (a) in einer nicht transparent erscheinenden Darstellung. In die zweite Durchgangsbohrung 13 der Trenneinheit 1 ist der Rückführleiter 33 eingelegt. Zudem ist das Anschlussende 31 des Heizleiters 3 sichtbar.

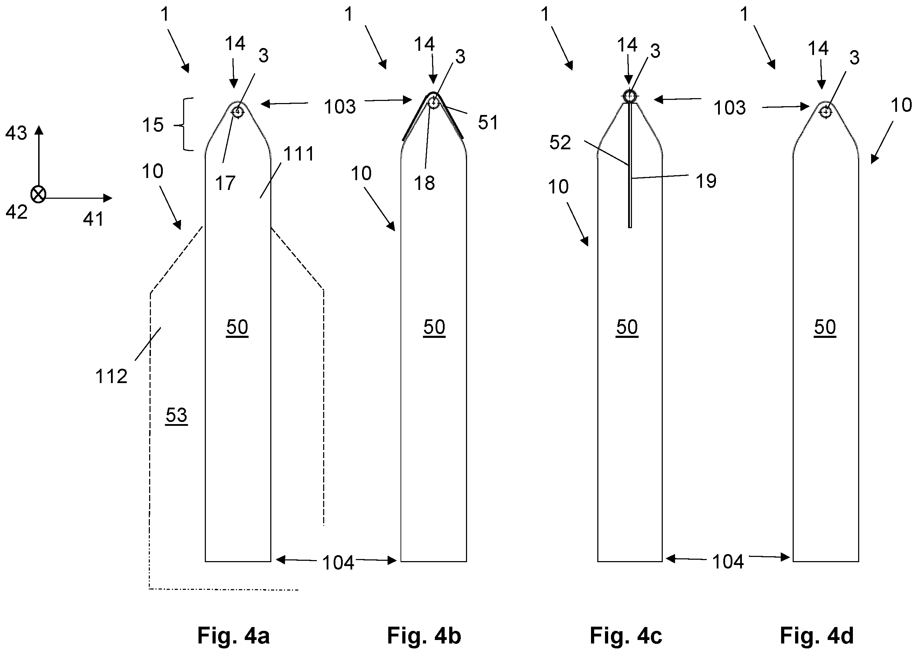

Fig. 4 zeigt in (a) - (d) jeweils schematisch ein Schnittbild durch eine Ausführungsform einer thermischen Trenneinheit 1. In allen Ausführungsformen weist die thermische Trenneinheit 1 jeweils den Stabilisierungskörper 10 sowie den Heizleiter 3 auf. Der Stabilisierungskörper 10 ist hier jeweils vollständig aus dem gut wärmeleitenden und/oder reaktionsträgen Material gebildet. Dies ist hier durch das Bezugszeichen 50 dargestellt.

Jedoch ist in Fig. 4 (a) durch eine gestrichelte Linie zudem eine Ausführungsform des Stabilisierungskörpers 10 schematisch angedeutet, bei der dieser einen Kern 111 aus dem reaktionsfähigen und/oder gut wärmeleitenden Material 50 und einen Mantel 112 aus einem kostengünstigeren Material 53 umfasst. Diese Ausführungsform ist gegenüber einer Ausführungsform des Stabilisierungskörpers 10, bei der dieser vollständig aus dem reaktionsfähigen und/oder gut wärmeleitenden Material 50 gebildet ist, kostengünstiger herstellbar. Eine solche Ausbildung ist auch für die anderen in Fig. 4 dargestellten Ausführungsformen möglich.

Allen Ausführungsformen der Fig. 4 ist gemein, dass der Stabilisierungskörper 10 an seinem Arbeitsende 103 den sich verjüngenden Bereich 15 aufweist. Die Ausführungsformen unterscheiden sich aber in der Anordnung des Heizleiters 3.

In Fig. 4 (a) ist der Heizleiter 3 in den Stabilisierungskörper 10 eingelegt. Dafür ist im sich verjüngenden Bereich 15, insbesondere hier unmittelbar unterhalb des Arbeitsendes 103, eine Durchgangsbohrung 17 vorgesehen, durch die sich der Heizleiter 3 erstreckt.

In Fig. 4 (b) weist der Stabilisierungskörper 10 am Arbeitsende eine Kerbe 18 auf, die sich von dem vorderen Ende 101 bis zum hinteren Ende 102 des Stabilisierungskörpers 10 erstreckt. In die Kerbe 18 ist der Heizleiter 3 eingelegt. Dadurch ist er an den Stabilisierungskörper 10 angelegt. Durch die Kerbe 18 ist er in seiner Lage gesichert. Zudem ist der Heizleiter 3 hier durch eine Materialbeschichtung 51 abgedeckt, die aus einem reaktionsträgen und/oder gut wärmeleitenden Material 51 gebildet ist. Die Materialbeschichtung 51 kann aus demselben Material 50 wie der Stabilisierungskörper 10 gebildet sein. Ein Teil des sich verjüngenden Bereichs 15 sowie der Heizleiter 3 sind hier mit diesem Material 51 beschichtet. Anstelle einer Beschichtung können der Teil des sich verjüngenden Bereichs 15 sowie der Heizleiter 3 auch durch ein Materialband 52 (s. Fig. 4 (c)) aus einem solchen Material abgedeckt sein.

In Fig. 4 (c) wird ein solches Materialband 52 zum Umwickeln des Heizleiters 3 genutzt. Auch hier ist der Heizleiter 3 am Arbeitsende 103 des Stabilisierungskörpers 10 angeordnet und erstreckt sich über seine gesamte Länge L. Um den Heizleiter 3 in seiner Position zu sichern, sind die Enden (nicht bezeichnet) des Materialbandes 52 in einen Aufnahmeschlitz 19, der sich in Längsrichtung 42 über die gesamte Länge L des Stabilisierungskörpers 10 erstreckt, eingesteckt.

Bei der Ausführungsform der Fig. 4 (d) ist der Heizleiter 3 analog der Fig. 4 (a) in den Stabilisierungskörper 10 eingelegt. Er erstreckt sich hier daher ebenfalls vom vorderen Ende 101 des Stabilisierungskörpers 10 bis zu dessen hinterem Ende 102. Die beiden Ausführungsformen unterscheiden sich dadurch, dass bei der in Fig. 4 (d) gezeigten Ausführungsform der Heizleiter 3 während der Herstellung des Stabilisierungskörpers 10 in diesen eingearbeitet ist. Dies ist beispielsweise bei einer Herstellung mit einem Strangpressverfahren oder einem Spritzgussverfahren möglich.

Gegenüber der Ausführungsform der thermischen Trenneinheit 1 der Fig. 4 (a) hat die Ausführungsform der Fig. 4 (d) den Vorteil, dass zwischen dem Stabilisierungskörper 10 und dem Heizleiter 3 keine Luftschicht (nicht gezeigt) besteht, durch die die Wärmeleitung verringert ist.

Fig. 5 zeigt in (a) - (d) jeweils schematisch eine Anordnung einer Ausführungsform einer thermischen Trenneinheit 1 an einem Bindemittel 61. Da das Bindemittel 61 von der Bindemittelrolle 61 lediglich abgewickelt ist, wird für das abgewickelte Bindemittel 61 und die Bindemittelrolle 61 hier dasselbe Bezugszeichen verwendet. Zur Erläuterung ist das von der Bindemittelrolle 61 abgewickelte Bindemittel 61 hier so dargestellt, dass es sich flächig entlang einer Ebene E erstreckt. Es ist an einem offenen Ende (nicht gezeigt) auf einen Erntegutballen 60 aufgewickelt. Dafür ist das Bindemittel 61 gespannt. Dies ist hier schematisch dadurch sichtbar, dass eine Breite B des abgewickelten Bindemittels 61 kleiner als eine Höhe H der Bindemittelrolle 61 ist.

Dabei erstreckt sich die thermische Trenneinheit 1 der Fig. 5 (a) über eine gesamte Breite B des abgewickelten Bindemittels 61. Dadurch kann das Bindemittel 61 in einem Arbeitsschritt mittels der thermischen Trenneinheit 1 entlang seiner ganzen Breite B, insbesondere geradlinig, durchtrennt werden.

Zum Durchtrennen des Bindemittels 61 wird die thermische Trenneinheit 1 kurzzeitig von einem Grundzustand in einen Trennzustand geschaltet, in dem eine Temperatur des Heizleiters 3 höher als im Grundzustand ist. Die thermische Trenneinheit 1 wird dafür mit ihrer Anlagefläche 14 am Arbeitsende 103 des Stabilisierungskörpers 10 an das Bindemittel 61 angelegt. Dafür wird sie auf das Bindemittel 61 zubewegt, oder das Bindemittel 61 kann auf die thermische Trenneinheit 1 zubewegt werden, bis die Anlagefläche 14 und das Bindemittel 61 aneinander anliegen. Bei dieser Ausführungsform wirkt die thermische Trenneinheit 1 daher auf die sich entlang der Ebene E erstreckende Fläche der Bindemittelrolle 61.

Aufgrund der Hitzeeinwirkung wird das Bindemittel 61 entlang der Anlagefläche 14 geschmolzen. Dadurch wird die Bindemittelrolle 61 vom Erntegutballen 60 getrennt.

Gegenüber der Ausführungsform der Fig. 5 (a) wird bei der Ausführungsform der Fig. 5 (b) lediglich ein Teil des Bindemittels 61 durch Hitzeeinwirkung durchtrennt. Die thermische Trenneinheit 1 umfasst dafür hier zwei Teileinheiten (nicht bezeichnet), von denen eine an einer oberen Kante 611 des Bindemittels 61 und die andere an einer unteren Kante 612 des Bindemittels 61 angeordnet ist. Bei dieser Ausführungsform sind die Teileinheiten so ausgerichtet, dass sie analog zur Ausführungsform der Fig. 5 (a) im Trennzustand flächig auf die durch das Bindemittel 61 aufgespannte Ebene E einwirken. Das Bindemittel 61 wird dadurch im Trennzustand an seiner oberen Kante 611 und an seiner unteren Kante 612 durchtrennt. Aufgrund der Spannung in dem Bindemittel 61, welche zwischen der Binderolle 61 und dem Erntegutballen 60 herrscht, wird das Bindemittel 61 dazwischen durchgerissen und somit auch dort getrennt.

Die Ausführungsform der Fig. 5 (c) unterscheidet sich durch die Ausführungsform der Fig. 5 (b) dadurch, dass die Teileinheiten der thermischen Trenneinheit 1 der Fig. 5 (c) um einen hier rechten Winkel gegenüber den Teileinheiten der thermischen Trenneinheit 1 der Fig. 5 (b) gedreht sind. Sie sind daher ebenfalls an der oberen Kante 611 und der unteren Kante 612 des Bindemittels 61 angeordnet. Jedoch wirkt die durch ihre Heizleiter erzeugte Hitze im Trennzustand unmittelbar auf die Kanten 611, 612 des Bindemittels 61. Dabei wird das Bindemittel 61 ebenfalls nur an den Kanten 611, 612 durchtrennt. Der übrige Teil (nicht bezeichnet) des Bindemittels 61 wird bei dieser Ausführungsform ebenfalls durchgerissen.

Fig. 5 zeigt in (d) schematisch eine Anordnung der Ausführungsform der thermischen Trenneinheit 1 der Fig. 5 (a) am Erntegutballen 60. Durch diese Anordnung können mehrere Lagen Bindemittel 61 unmittelbar am Erntegutballen 60 durchtrennt werden. Zudem kann die Schnittkante (nicht gezeigt) des am Erntegutballen 60 angeordneten Bindemittels 61 dadurch an einer unteren Lage (nicht gezeigt) des Bindemittels 61 unmittelbar verschweißt werden, so dass sich das Bindemittel 61 nicht mehr vom Erntegutballen 60 lösen kann.

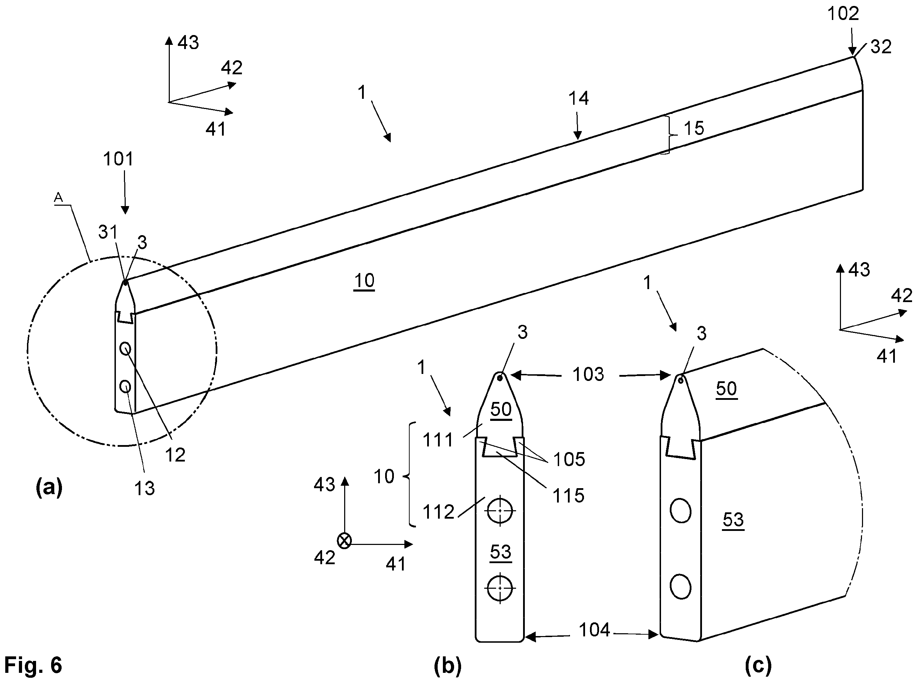

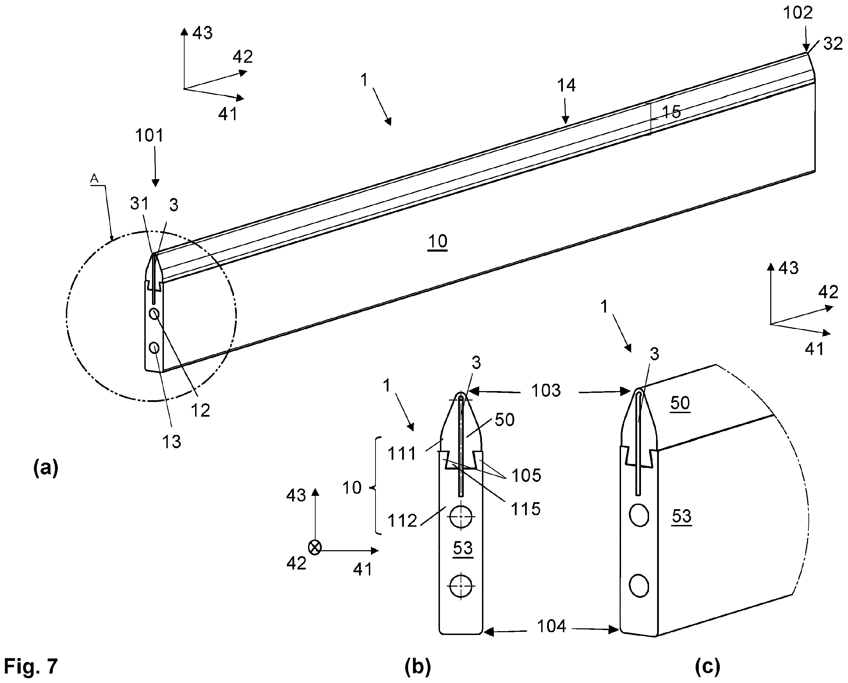

Fig. 6 und 7 zeigen jeweils eine weitere Ausführungsform einer erfindungsgemäßen Trenneinheit 1. Dabei zeigen die Fig. 6 und 7 in (a) jeweils die Trenneinheit 1 in einer perspektivischen Ansicht, die Fig. 6 und 7 in (b) jeweils eine Schmalseite (nicht bezeichnet) der Trenneinheit 1 in einer Seitenansicht, und die Fig. 6 und 7 in (c) jeweils einen Ausschnitt A aus (a).

Die Ausführungsformen der Fig. 6 und 7 unterscheiden sich darin, dass der Heizleiter 3 der Ausführungsform der Fig. 6 als Draht, und der Heizleiter 3 der Ausführungsform der Fig. 7 als Band ausgebildet sind.

Gegenüber der Ausführungsform der Fig. 2 und 3 weisen die thermischen Trenneinheiten 1 der Fig. 6 und 7 jeweils einen Stabilisierungskörper 10 mit einem Kern 111 aus dem reaktionsfähigen und/oder gut wärmeleitenden Material 50 und einen Mantel 112 aus einem kostengünstigeren Material 53 auf. Der Kern 111 ist hier bevorzugt aus Silikon gebildet. Er kann aber auch aus einem anderen, reaktionsfähigen und/oder gut wärmeleitenden Material 50 wie beispielsweise aus Polytetrafluorethylen gebildet sein.

Der aus dem reaktionsträgen und/oder gut wärmeleitenden Material 50 gebildete Kern weist ein sich verjüngendes Ende 15 auf. Der Heizleiter 3 ist am sich verjüngenden Ende 15 in den Kern eingelegt. Er erstreckt sich unterhalb des Arbeitsendes in Längsrichtung 42 der Trenneinheit 1.

Dabei erstreckt sich der bandförmig ausgebildete Heizleiter der Ausführungsform der Fig. 7 hier gegen die Erstreckungsrichtung 43 bis in den Mantel 112 hinein. Er kann aber auch vollumfänglich in den Kern 111 integriert sein.

Der Kern 111 und der Mantel 112 sind hier durch eine Feder- Nut Verbindung miteinander verbunden. Dabei ist die Feder- Nut Verbindung hier schwalbenschwanzförmig ausgebildet. Daher können der Kern und der Mantel nach ihrer Herstellung ineinander eingeschoben werden. Der Kern 111 und der Mantel 112 können aber auch durch ein Mehrkomponenten- Spritzgussverfahren einstückig hergestellt werden. Dabei kann der Heizleiter 3 in den Kern 111, oder wie im Fall der Fig. 7, in Kern und Mantel, integriert werden.

In beiden Ausführungsformen der Fig. 6 und 7 kann der Heizleiter 3 aber auch nach dem Herstellen des Stabilisierungskörpers 10 in diesen eingefügt, insbesondere eingeschoben oder eingezogen, werden.

Die Ausführungsformen der Fig. 6 und 7 haben den Vorteil, dass lediglich ein kleiner Teil der Trenneinheit 1 aus dem reaktionsfähigen und/oder gut wärmeleitenden Material 50 hergestellt sind, und die Trenneinheit 1 daher insgesamt kostengünstig herstellbar ist.

## Patentansprüche

1. Thermische Trenneinheit (1) für eine landwirtschaftliche Arbeitsmaschine in Form einer Ballenpresse oder eines Ballenwicklers, die zum Durchtrennen eines Bindemittels (61) vorgesehen ist, und die zum Durchtrennen des Bindemittels (61) eine Hitzequelle umfasst,
**dadurch gekennzeichnet, dass**
die thermische Trenneinheit (1) einen Stabilisierungskörper (10) umfasst, der an einem Arbeitsende (103) einen sich verjüngenden Bereich (15) aufweist, und der am Arbeitsende (103) eine sich linienförmig in eine Längsrichtung (42) erstreckende Anlagefläche (14) für das Bindemittel (61) bildet, wobei in die Trenneinheit (1) als Hitzequelle ein Heizleiter (3) integriert ist, wobei sich der Heizleiter (3) am Arbeitsende (103) in die Längsrichtung (42) erstreckt, und in den Stabilisierungskörper (10) eingelegt oder an den Stabilisierungskörper (10) angelegt ist.

2. Landwirtschaftliche Arbeitsmaschine (8) in Form einer Ballenpresse oder eines Ballenwicklers, mit einer Bindeeinheit (83) zum Bereitstellen eines Bindemittels (61), das zum Umwickeln eines Erntegutballens (60) vorgesehen ist, und mit einer thermischen Trenneinheit (1) nach Anspruch 1.

3. Landwirtschaftliche Arbeitsmaschine (8) nach Anspruch 2, **dadurch gekennzeichnet, dass** die thermische Trenneinheit (1) in der Bindeeinheit (83), zwischen der Bindeeinheit (83) und einem Pressraum (84), und/oder in einer Umwickeleinheit (85) angeordnet ist.

4. Landwirtschaftliche Arbeitsmaschine (8) nach einem der Ansprüche 2 - 3, **dadurch gekennzeichnet, dass** der Heizleiter (3) zumindest teilweise von Polytetrafluorethylen (50, 51 52) umgeben ist.

5. Landwirtschaftliche Arbeitsmaschine (8) nach einem der Ansprüche 2 - 4,
**dadurch gekennzeichnet, dass** der Stabilisierungskörper (10) zumindest teilweise aus Polytetrafluorethylen (50, 51, 52) gebildet ist.

6. Landwirtschaftliche Arbeitsmaschine (8) nach einem der Ansprüche 2 - 5,
**dadurch gekennzeichnet, dass** das sich verjüngende Ende (15) des Stabilisierungskörpers (10) aus Polytetrafluorethylen (50) gebildet, und der Heizleiter (3) am sich verjüngenden Ende (15) des Stabilisierungskörpers (10) in diesen eingelegt ist.

7. Landwirtschaftliche Arbeitsmaschine nach einem der Ansprüche 2 - 6, **dadurch gekennzeichnet, dass** die thermische Trenneinheit (1) einen Sensor (30) zur Erfassung ihrer oder der Temperatur des Heizleiters (3) umfasst.

8. Landwirtschaftliche Arbeitsmaschine nach einem der Ansprüche 2 - 7, **dadurch gekennzeichnet, dass** sie eine Steuerungseinheit (81) zum Steuern der thermischen Trenneinheit (1), insbesondere in Abhängigkeit von der erfassten Temperatur, umfasst.

9. Landwirtschaftliche Arbeitsmaschine nach einem der Ansprüche 7 - 8, **dadurch gekennzeichnet, dass** der Sensor (30) ein Bimetallsensor ist und in einem elektrischen Schaltkreis der thermischen Trenneinheit (1) angeordnet ist.

10. Landwirtschaftliche Arbeitsmaschine nach einem der Ansprüche 7 - 9, **dadurch gekennzeichnet, dass** sie eine Thermosicherung umfasst, die die thermische Trenneinheit (1) abschaltet, wenn die Temperatur eine Grenztemperatur überschreitet.

11. Landwirtschaftlicher Arbeitszug (100) mit einer Zugmaschine (9) und einer landwirtschaftlichen Arbeitsmaschine (8) nach einem der Ansprüche 2 - 10, die an die Zugmaschine angehängt ist, wobei die Zugmaschine (9) eine Benutzerschnittstelle (90) umfasst, die zum Einstellen der thermischen Trenneinheit (1) vorgesehen ist.

12. Verfahren zum Steuern einer thermischen Trenneinheit (1) nach Anspruch 1, bei dem eine Hitzequelle der thermischen Trenneinheit (1) in einem Grundzustand nicht oder nur mit einer Grundtemperatur betrieben wird, und bei dem die Hitzequelle nur in einem Trennzustand, in dem ein zum Umwickeln eines Erntegutballens (60) vorgesehenes Bindemittel (61) durchtrennt wird, auf eine Trenntemperatur, die größer als die Grundtemperatur ist, aufgeheizt wird.

## Claims

1. Thermal separation unit (1) for an agricultural working machine in the form of a baling press or a bale wrapper, which thermal separation unit is provided for cutting through a binding means (61) and comprises a heat source for cutting through the binding means (61),
**characterized in that**
the thermal separation unit (1) comprises a stabilizing body (10) which has a tapering region (15) at a working end (103) and forms a contact surface (14) for the binding means (61) at the working end (103), which contact surface extends linearly in a longitudinal direction (42), a heating conductor (3) being integrated into the separation unit (1) as a heat source, the heating conductor (3) extending in the longitudinal direction (42) at the working end (103) and being inserted into the stabilizing body (10) or being attached to the stabilizing body (10).

2. Agricultural working machine (8) in the form of a baling press or a bale wrapper, comprising a binding unit (83) for supplying a binding means (61) which is provided for wrapping a crop bale (60), and comprising a thermal separation unit (1) according to claim 1.

3. Agricultural working machine (8) according to claim 2,
**characterized in that** the thermal separation unit (1) is arranged in the binding unit (83), between the binding unit (83) and a pressing chamber (84), and/or in a wrapping unit (85).

4. Agricultural working machine (8) according to either of claims 2 - 3,
**characterized in that** the heating conductor (3) is at least partially surrounded by polytetrafluoroethylene (50, 51, 52).

5. Agricultural working machine (8) according to any of claims 2 - 4,
**characterized in that** the stabilizing body (10) is at least partially formed from polytetrafluoroethylene (50, 51, 52).

6. Agricultural working machine (8) according to any of claims 2 - 5,
**characterized in that** the tapering end (15) of the stabilizing body (10) is formed from polytetrafluoroethylene (50), and the heating conductor (3) is inserted into the stabilizing body (10) at the tapering end (15) thereof.

7. Agricultural working machine according to any of claims 2 - 6,
**characterized in that** the thermal separation unit (1) comprises a sensor (30) for detecting the temperature of the thermal separation unit or the temperature of the heating conductor (3).

8. Agricultural working machine according to any of claims 2 - 7,
**characterized in that** it comprises a control unit (81) for controlling the thermal separation unit (1), in particular depending on the detected temperature.

9. Agricultural working machine according to either of claims 7 - 8,
**characterized in that** the sensor (30) is a bimetal sensor and is arranged in an electrical circuit of the thermal separation unit (1).

10. Agricultural working machine according to any of claims 7 - 9,
**characterized in that** it comprises a thermal fuse which switches off the thermal separation unit (1) when the temperature exceeds a limit temperature.

11. Agricultural work train (100) comprising a tractor (9) and an agricultural work machine (8) according to any of claims 2 - 10 which is attached to the tractor, wherein the tractor (9) comprises a user interface (90) which is provided for adjusting the thermal separation unit (1).

12. Method for controlling a thermal separation unit (1) according to claim 1, in which a heat source of the thermal separation unit (1) is not operated in a basic state or is only operated at a basic temperature, and in which the heat source is only heated to a separation temperature, which is greater than the basic temperature, in a separation state, in which a binding means (61) provided for wrapping a crop bale (60) is cut through.

## Revendications

1. Unité (1) de séparation thermique pour une machine de travail agricole sous la forme d'une presse à balles ou d'un enrouleur de balles, qui est prévue pour la séparation d'un liant (61) et qui comprend, pour la séparation du liant (61), une source de chaleur,
**caractérisée en ce que**
l'unité (1) de séparation thermique comprend un corps (10) de stabilisation, qui a une partie (15) se rétrécissant à une extrémité (103) de travail et qui forme, à l'extrémité (103) de travail, pour le liant (61) une surface (14) d'application s'étendant linéairement dans une direction (42) longitudinale, dans laquelle un conducteur (3) chauffant est intégré comme source de chaleur dans l'unité (1) de séparation, dans laquelle le conducteur (3) chauffant s'étend dans la direction (42) longitudinale à l'extrémité (103) de travail et est inséré dans le corps (10) de stabilisation ou est appliqué au corps (10) de stabilisation.

2. Machine (8) de travail agricole sous la forme d'une presse à balles ou d'un enrouleur de balles, comprenant une unité (83) de liage pour disposer d'un liant (61), qui est prévu pour l'enroulement d'une balle (60) de récolte, et comprenant une unité (1) de séparation thermique suivant la revendication 1.

3. Machine (8) de travail agricole suivant la revendication 2, **caractérisée en ce que** l'unité (1) de séparation thermique dans l'unité (83) de liage est disposée entre l'unité (83) de liage et un espace (84) de presse et/ou dans une unité (85) d'enroulement.

4. Machine (8) de travail agricole suivant l'une des revendications 2 à 3, **caractérisée en ce que** le conducteur (3) chauffant est entouré au moins en partie de polytétrafluoroéthylène (50, 51, 52).

5. Machine (8) de travail agricole suivant l'une des revendications 2 à 4, **caractérisée en ce que** le corps (10) de stabilisation est formée au moins en partie de polytétrafluoroéthylène (50, 51, 52).

6. Machine (8) de travail agricole suivant l'une des revendications 2 à 5, **caractérisée en ce que** l'extrémité (15) se rétrécissant du corps (10) de stabilisation est en polytétrafluoroéthylène (50) et le conducteur (3) chauffant est inséré à l'extrémité (15) se rétrécissant du corps (10) de stabilisation dans celui-ci.

7. Machine de travail agricole suivant l'une des revendications 2 à 6, **caractérisée en ce que** l'unité (1) de séparation thermique comprend un capteur (30) de détection de sa température ou de la température du conducteur (3) chauffant.

8. Machine de travail agricole suivant l'une des revendications 2 à 7, **caractérisée en ce qu'**elle comprend une unité (81) de commande pour la commande de l'unité (1) de séparation thermique, en particulier en fonction de la température détectée.

9. Machine de travail agricole suivant l'une des revendications 7 à 8, **caractérisée en ce que** le capteur (30) est un capteur bimétallique et monté dans un circuit électrique de l'unité (1) de séparation thermique.

10. Machine de travail agricole suivant l'une des revendications 7 à 9, **caractérisée en ce qu'**elle comprend un dispositif de sécurité thermique, qui met hors circuit l'unité (1) de séparation thermique si la température dépasse une température limite.

11. Train (100) de travail agricole comprenant une machine (9) de traction et une machine (8) de travail agricole suivant l'une des revendications 2 à 10, qui est accrochée à la machine de traction, dans lequel la machine (9) de traction comprend une interface (90) d'utilisateur, qui est prévue pour le réglage de l'unité (1) de séparation thermique.

12. Procédé de commande d'une unité (1) de séparation thermique suivant la revendication 1, dans lequel on ne fait pas fonctionner dans un état de base ou on ne fait fonctionner qu'à une température de base une source de chaleur de l'unité (1) de séparation thermique et dans lequel on porte à une température de séparation, qui est plus haute que la température de base, la source de chaleur seulement dans un état de séparation, dans lequel on sépare un liant (61) prévu pour l'enroulement d'une balle (60) de récolte.
